# EUROPÄISCHE PATENTANMELDUNG

(11) **EP 2 689 677 A1**
(43) Veröffentlichungstag der Anmeldung: **29.01.2014**
(21) Anmeldenummer: 12178300.5
(22) Anmeldetag: 27.07.2012
(51) Int. Cl.: A23N 12/10, A23N 12/12

(54) **Röstvorrichtung für pflanzliches Schüttgut**

(71) Anmelder: Bühler AG, 9240 Uzwil (CH)
(72) Erfinder: Braun, Peter, 8280 Kreuzlingen (CH); Keller, Marco, 8500 Frauenfeld (CH); Dintheer, Fabian, 9244 Niederuzwil (CH); Schenker, Stefan, 9230 Flawil (CH)
(74) Vertreter: Hepp Wenger Ryffel AG

(57) **Zusammenfassung**

Die Erfindung betrifft eine Röstvorrichtung für pflanzliches Schüttgut, insbesondere Kaffeebohnen. Die Vorrichtung weist einen zusätzlichen Abgasaustrag (12) auf, insbesondere eine Hohlwelle (13) zum Abführen von Röstabgas aus dem Röstbehälter (2) und/oder die Vorrichtung weist eine Hohlwelle zum Zuführen von erhitztem Gas auf, wobei das Gas über auf der Hohlwelle angebrachte Rührwerkzeuge in die Röstkammer einbringbar ist.

## Beschreibung

Die Erfindung betrifft eine Röstvorrichtung für pflanzliches Schüttgut, insbesondere Kaffeebohnen sowie ein Verfahren zum Rösten von pflanzlichem Schüttgut.

Das Rösten von pflanzlichem Schüttgut, insbesondere Kaffeebohnen findet in der Regel in einer Röstvorrichtung statt, die einen Röstbehälter aufweist, in welchem das Schüttgut geröstet wird. Hierbei handelt es sich beispielsweise um eine Rösttrommel. Durch den Röstbehälter wird ein erhitztes Gas, üblicherweise Luft, zum Rösten des Schüttguts geleitet.

Der Röstbehälter weist eine Zuführung zum Zuführen erhitzter Gase in den Röstbehälter auf, über welche der Röstbehälter mit in einem Brenner oder Gaserhitzungsofen erzeugtem heissem Gas versorgt wird.

Der Röstbehälter ist ausserdem mit einer Abgasleitung zum Austragen der Röstabluft verbunden, wobei ein Teil der Abgase wieder der Brennkammer zugeführt werden kann. Mit dem Abgas werden typischerweise auch beim Rösten anfallenden Schüttgut-Teilstückchen, wie die Silberhäutchen von Kaffeebohnen, abtransportiert. Ein Verbleib der Schüttgut-Teilstückchen in dem Röstbehälter würde zu einer Brandgefahr führen. Die Abgasleitung kann mit einer Abgasreinigungseinrichtung verbunden sein.

Die am weitesten verbreitete Vorrichtung zum Rösten ist der Trommel-Röster, bei welchem das Röstgut in einer insbesondere rotierenden Trommel mit einem durchgeleiteten Strom von erhitztem Gas durchmischt wird. Die Erfindung bezieht sich insbesondere auf diese Art von Röstvorrichtung.

Die Röstzeit ist abhängig von der Grösse des Behälters, der Menge des Schüttguts, der Temperatur und der Menge des durchgeleiteten erhitzen Gases.

Für das Erreichen eines bestimmten Geschmacksprofils im Röstgut kann die Röstzeit entscheidend sein.

Bei einer festgelegten Menge von Schüttgut in einem gegebenen Behälter kann die Röstzeit beispielsweise durch eine Erhöhung der Heissgastemperatur verkürzt werden. Diesem Prozessparameter sind allerdings Grenzen gesetzt, denn es hat sich gezeigt, dass sich Heissgastemperaturen von über 600°C negativ auf das Röstaroma und die Farbbildung auswirken.

Gemäss JP 2009-077668 kann ein schneller Röstprozess unter hohen Temperaturen erfolgen, wenn das Heissgas einen hohen Feuchtigkeitsgehalt aufweist. Dabei wird allerdings ein neuer charakteristischer Geschmack erzeugt.

Eine Verkürzung der Röstzeit kann auch bewirkt werden, wenn das Schüttgut schnell homogen erhitzt wird, wenn also mehr Heissgas durch die Röstkammer geleitet wird und somit das Luft-zu-Bohnen Verhältnis vergrössert wird.

Bei handelsüblichen Trommel-Röstern ist das maximal mögliche Luft-zu-Bohnen-Verhältnis begrenzt, da bei einer grösseren Menge an Heissgas, die z.B. mit einer höheren Strömungsgeschwindigkeit und/oder einer grösseren Abgasöffnung erreicht werden kann, leicht Schüttgut mit dem Abgas aus dem Röstbehälter heraus getragen wird. Damit diese Menge nicht verloren geht, kann dem Röstbehälter ein Expansionsgefäss nachgeschaltet werden, welches einen erhöhten Durchflussquerschnitt aufweist und die Gasgeschwindigkeit wieder absinken lässt. Dabei fällt das Schüttgut wieder aus dem Gasstrom heraus, bevorzugt zurück in den Röstbehälter. Ein gewisser Anteil des Schüttguts wird allerdings mit dem Abgasstrom mitgerissen und im nachgeschalteten Heissluft-Zyklon ausgeschieden, was zu einem beträchtlichen Herstellungs-Verlust führen kann.

Das Expansionsgefäss benötigt ausserdem Platz.

Es besteht daher die Aufgabe, eine Vorrichtung und ein Verfahren zum Rösten von pflanzlichem Schüttgut vorzustellen, bei denen die Nachteile des Bekannten überwunden werden und die Röstzeit flexibel gehandhabt werden kann.

Die Aufgabe wird gelöst durch eine Röstvorrichtung für pflanzliches Schüttgut, insbesondere Kaffeebohnen, mit einem Röstbehälter zum Rösten des pflanzlichen Schüttguts, einer Zuführung zum Zuführen erhitzter Gase in den Röstbehälter und einer Abgasleitung zum Austragen der Röstabluft, dadurch gekennzeichnet, dass die Vorrichtung einen zusätzlichen Abgasaustrag aufweist.

Dieser lässt ein erhöhtes Luft-zu-Bohnen-Verhältnis zu.

In einer bevorzugten Ausführung der Erfindung, umfasst die Röstvorrichtung ein statisches Röstgehäuse und eine drehbare Trommel und/oder drehbar gelagerte Rührwerkzeuge. Die Abgasleitung ist wie bei herkömmlichen Trommel-Röstern mit einer Abgasöffnung in der Stirnwand des statischen Röstgehäuses verbunden.

Zusätzlich zu der Abgasöffnung kann eine weitere Abgasöffnung in der Stirnwand des Röstgehäuses vorliegen.

Vorteilhafterweise ist die zusätzliche Abgasöffnung mit einem Sieb bedeckt, sodass kein Schüttgut abtransportiert wird.

Unter einem Sieb wird im Folgenden ein Filterelement verstanden, das Partikel mit einem Durchmesser oberhalb einer definierten Grösse den Durchgang versperrt. Ein Sieb kann z.B. in Form eines Geflechts, eines Lochblechs, eines Filters oder eines Rosts vorliegen.

Damit die zusätzliche Abgasöffnung nicht durch Schüttgut-Teilstückchen verstopft wird, kann ein Abstreifer vorgesehen sein, der sich insbesondere mit der Trommel und/oder den Rührwerkzeugen dreht und die zusätzliche Abgasöffnung frei hält. Die zusätzliche Abgasöffnung ist bevorzugt in der Nähe der Drehachse der Trommel und/oder der Drehwerkzeuge angebracht. Durch die während der Röstung in Drehung versetzte Trommel und/oder der Drehwerkzeuge wird das Schüttgut aufgrund der Zentrifugalkraft mehrheitlich an der Trommelwand und in einem Abstand von der Welle, somit auch von der zusätzlichen Abgasöffnung, verteilt, sodass die Öffnung frei bleibt.

Die zusätzliche Abgasöffnung kann mit einem, bevorzugt zylindrischen oder konischen, Siebkorb versehen sein, der in den Röstbehälter hineinragt und der bevorzugt um die Zylinder -oder Konusachse rotierbar ist. Die Rotation des Siebkorbes verhindert ein Eindringen von Schüttgut-Teilstückchen durch die Siebfläche des Siebkorbes, da die Schüttgut-Teilchen von dem rotierenden Siebkorb weggeschleudert werden.

Alternativ kann die Vorrichtung einen Abgasaustrag in Form einer Hohlwelle zum Abführen von Röstabgas aus dem Röstbehälter aufweisen.

Typischerweise besitzt die Röstvorrichtung eine Welle zum Drehen der Rösttrommel und/oder zum Drehen von Rührwerkzeugen in dem Röstbehälter, die vorteilhafterweise als Hohlwelle ausgebildet ist.

Bevorzugt ist mindestens eine Öffnung in der Welle vorgesehen, durch die Röstabgas aus dem Röstbehälter in die und/oder Heissgas aus der Hohlwelle in den Röstbehälter gelangt. Auch bei einem Röstgasaustrag durch eine Hohlwelle trägt die Zentrifugalkraft dazu bei, dass sich die festen Partikel, also das Schüttgut und Schüttgut-Teilstückchen eher an der Trommelwand als in der Nähe der Welle befinden, und somit mit geringerer Wahrscheinlichkeit von dem Röstgas mitgerissen werden und/oder die Öffnungen in der Welle verschliessen.

Für den Abgasaustrag sind vorteilhafterweise Röstabgasöffnungen im Mantel der Hohlwelle vorgesehen. Diese sind bevorzugt mit einem Sieb oder einem Lochblech bedeckt, sodass kein Schüttgut abtransportiert wird.

Damit die Röstabgasöffnungen nicht durch Schüttgut-Teilstückchen verstopft werden, kann ein Abstreifer vorgesehen sein, der die Röstabgasöffnungen frei hält. Da sich die Welle mit der Trommel und/oder den Rührwerkzeugen dreht, kann der Abstreifer statisch am Gehäuse angebracht sein.

Ein Eindringen von Schüttgut-Teilstückchen und Schüttgut in die Öffnungen der Hohlwelle kann auch verhindert werden, wenn auf der Mantelfläche der Hohlwelle Ablenkbleche für eine scharfe Röstgasumlenkung angebracht sind. Das durchgeblasene oder abgesaugte Röstgas gelangt durch die Öffnungen, von der Gasströmung mitgerissene dagegen werden feste Stoffe, wie Schüttgut oder Röstabfall, an den Blechen abgelenkt. Die Bleche verhindert auch ein Anhaften von feinen Schüttgut-Teilstückchen.

Zusätzlich oder alternativ kann in der Hohlwelle ein Siebkorb vorgesehen sein, in welchem Material gesammelt wird, dass dennoch in die Hohlwelle gelangt. Bevorzugt ist der Siebkorb zu Reinigungs- und/oder Wartungszwecken aus der Hohlwelle entnehmbar bzw. austauschbar.

Der Heissluftdurchsatz und das Luft-zu-Bohnen-Verhältnis kann auch erhöht werden, wenn alternativ oder zusätzlich die Vorrichtung eine Hohlwelle zum Zuführen von erhitztem Gas aufweist, wobei von der Hohlwelle abzweigenden Gasleitungen mit radial von der Hohlwelle beabstandeten Gasdüsen vorgesehen sind, sodass das Gas über die Gasdüsen, in die Röstkammer einbringbar ist.

Bevorzugt sind auf die Gasdüsen auf an der Hohlwelle angebrachten Rührwerkzeugen angeordnet. Die Rührwerkzeuge sind hohl oder verfügen über eine Gasleitung, sodass das Gas durch die Rührwerkzeuge hindurch geleitet werden kann.

Auf diese Weise kann das Heissgas an die Peripherie der Rösttrommel geleitet werden, wo sich das Schüttgut aufgrund der Zentrifugalkraft bevorzugt aufhält. Das Gas wird also unmittelbar an das Schüttgut herangeführt und seine Wärme direkt an das Schüttgut abgegeben. Der Röstprozess kann so ebenfall beschleunigt werden und somit die Röstzeit verkürzt werden.

In einer vorteilhaften Ausführung ist die Röstvorrichtung mit einer Absaugvorrichtung, insbesondere einem einstellbarem Ventilator, ausgestattet, die mit der Abgasleitung verbunden ist. Mit dem Ventilator kann der Heissgasdurchsatz eingestellt werden. Je nach gewünschter Röstzeit und/oder gewünschtem Luft-zu-Bohnen-Verhältnis kann die Menge und/oder Geschwindigkeit der durchgeführten Heissluft variiert werden.

Bevorzugt weist die Röstvorrichtung einen zusätzlichen Abgasaustrag auf, der mit einer separaten Absaugvorrichtung, insbesondere mit einem einstellbaren Ventilator, verbunden ist. Neben dem Hauptröststrom kann auf diese Weise ein zusätzlicher Heissluftdurchzug eingestellt werden.

Alternativ kann der zusätzliche Abgasaustrag mit der Abgasleitung verbunden sein. Bevorzugt kann eine einstellbare Drosselklappe zwischengeschaltet sein. Über die Drosselklappe kann eingestellt werden, wie viel Heissgas zusätzlich zum Hauptstrom durch die Röstkammer geleitet wird.

In einer zweckmässigen Ausführung weist die Vorrichtung eine Hohlwelle auf und die Hohlwelle ist zumindest auf einer Seite mit einer Dreheinführung oder Drehdurchführung, z.B. einer Deublin-Dreheinführung, verbunden. Heissluft kann durch die Dreheinführung in die Hohlwelle geführt werden und/oder Röstabluft kann durch die Dreheinführung aus der Hohlwelle und damit aus dem Röstbehälter abgeführt werden. Die Dreheinführung kann eine axiale oder radiale Schnittstelle aufweisen.

Die Dreheinführung kann als Lager für die Hohlwelle dienen, wenn zum Beispiel das feststehende Gehäuse der Dreheinführung mit dem Röstgehäuse verbunden ist. Oder die Dreheinführung kann die mechanische Drehbewegung der Hohlwelle durch die Röstbehälterwand hindurch übertragen.

Insbesondere ist die Hohlwelle zumindest auf einer Seite ausserhalb des Röstbehälters gelagert, insbesondere mindestens auf der Seite der Abgasabführung. Die Röstabluft kann dann zwischen Röstbehälter und Lagerung aus der Hohlwelle herausgeführt werden.

Die der Erfindung zugrunde liegende Aufgabe wird weiterhin gelöst durch eine Hohlwelle zum Gebrauch in einer Röstvorrichtung mit einem Röstbehälter, insbesondere einer Trommelröstvorrichtung, insbesondere wie oben beschrieben. Die Hohlwelle weist mindestens eine Öffnung auf, durch die während des Betriebs der Röstvorrichtung Röstabgas vom Röstbehälter in die Hohlwelle und/oder Heissgas aus der Hohlwelle in den Röstbehälter gelangen kann.

Die Hohlwelle weist ausserdem einen Anschluss zur Verbindung mit einer Absaugvorrichtung auf.

Alternativ oder zusätzlich sind von der Hohlwelle abzweigenden Gasleitungen mit radial von der Hohlwelle beabstandeten Gasdüsen vorgesehen, sodass das Gas über die Gasdüsen in die Röstkammer einbringbar ist.

Bevorzugt sind die Gasdüsen auf einem Rührwerkzeug angeordnet.

Die der Erfindung zugrunde liegende Aufgabe wird weiterhin gelöst durch ein Verfahren zum Rösten von pflanzlichem Schüttgut, insbesondere Kaffeebohnen, in einer Röstvorrichtung mit einem Röstbehälter, insbesondere wie oben beschrieben. Erhitztes Gas wird in den Röstbehälter geleitet und Röstabluft wird über eine Abgasleitung aus dem Röstbehälter ausgeleitet. Zumindest ein Teil des Röstabgases wird durch eine Hohlwelle aus dem Röstbehälter abgeführt.

Alternativ oder zusätzlich wird der Heissgasdurchsatz erhöht, wenn zumindest ein Teil des Heissgases über von einer Hohlwelle abzweigende Gasleitungen mit radial von der Hohlwelle beabstandeten Gasdüsen, die insbesondere auf einem Rührwerkzeug angeordnet sind, in die Röstkammer eingebracht wird.

Die Erfindung wird nachfolgend in Ausführungsbeispielen anhand von Zeichnungen näher erläutert.

Es zeigen
- Figur 1: eine schematische Schnittdarstellung eines ersten Ausführungsbeispiels für eine Röstvorrichtung;
- Figur 2: eine schematische Schnittdarstellung eines zweiten Ausführungsbeispiels für eine Röstvorrichtung mit Hohlwelle;
- Figur 3: eine schematische Schnittdarstellung eines dritten Ausführungsbeispiels für eine Röstvorrichtung mit Hohlwelle;
- Figur 4: eine schematische Schnittdarstellung eine Hohlwelle mit Ablenkblechen;
- Figur 5a: ein Diagramm, wobei die Heisslufttemperatur über der Zeit aufgetragen ist;
- Figur 5b: ein Diagramm, wobei die Produkttemperatur über der Zeit aufgetragen ist;
- Figur 6: eine schematische Schnittdarstellung des ersten Ausführungsbeispiels für eine Röstvorrichtung mit einer alternativen Abführung des Abgasstroms.

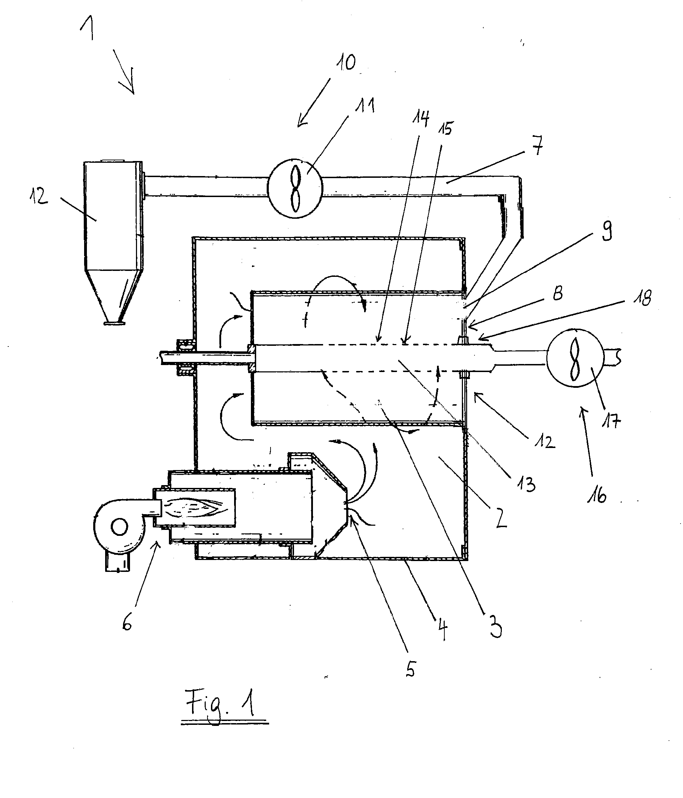

Figur 1 zeigt eine schematische Schnittdarstellung eines ersten Ausführungsbeispiels für eine Röstvorrichtung 1. Pflanzliches Schüttgut wird in einem Röstbehälter 2 geröstet. Das Schüttgut befindet sich in einer Rösttrommel 3, die in einem Röstgehäuse 4 drehbar ist.

Über eine Zuführung 5 wird in einer Gas-Erhitzungskammer 6 erhitztes Gas in den Röstbehälter 2 geführt.

Die Rösttrommel 3 ist teilweise oder ganz perforiert, sodass das heisse Gas das Schüttgut umströmen kann.

Röstabgas und Schüttgut-Teilstückchen, die beim Rösten anfallen, werden über eine Abgasleitung 7 aus dem Röstbehälter 2 abgeführt.

In der Stirnseite 8 des Röstgehäuses 4 ist dazu eine Abgasöffnung 9 vorgesehen, durch welche die Röstabgase mit einer Absaugvorrichtung 10, hier einem einstellbaren Ventilator 11, wegbefördert werden.

Das Abgas wird dann durch einen Zyklon 12 geführt, wo die festen Abfallstoffe von Abgas separiert werden.

Das noch warme Abgas kann wieder in den Röstbehälter 2 rückgeführt werden.

Die Röstvorrichtung 1 weist einen zusätzlichen Abgasaustrag 12 auf, in diesem Fall eine Hohlwelle 13 zum Abführen von Röstabgas aus dem Röstbehälter 2.

In der Hohlwelle 13 sind Öffnungen 14 vorgesehen, durch die Röstabgas von der Rösttrommel 3 in die Hohlwelle 13 gelangt. Die Öffnungen 14 sind mit einem Sieb 15 bedeckt, welches zumindest teilweise verhindert, dass pflanzliches Schüttgut in die Hohlwelle 13 eindringt.

Die Vorrichtung weist ausserdem eine separate Absaugvorrichtung 16 auf, die mit der Hohlwelle verbunden ist. Der zusätzliche Abgasstrom kann über einen eigenen Ventilator 17 separat vom Hauptabgasstrom eingestellt werden.

Die Hohlwelle 13 wird mittels einer Dreheinführung 18 aus der Stirnseite 8 des Röstgehäuses 4 geführt.

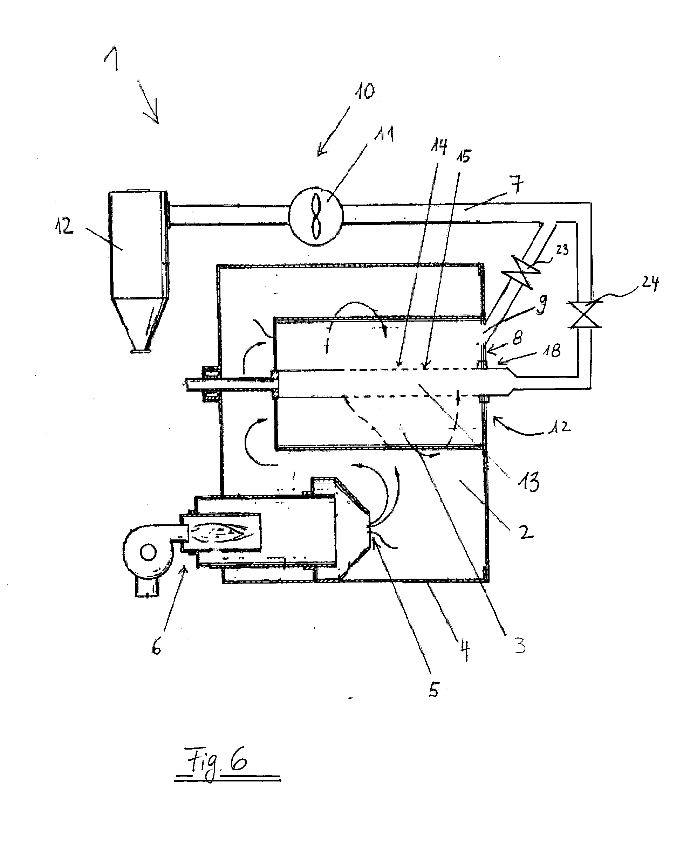

In einer alternativen, wie in Figur 6 dargestellten Ausführung kann der zusätzliche Abgasstrom aber auch mit dem Hauptventilator 11 verbunden sein, wobei die Anteile der Luftströme, welche über die Abgasöffnung 9 und über die Hohlwelle 13 abgeleitet werden, mit zwischengeschalteten Drosselklappen 23, 24 variabel eingestellt werden können.

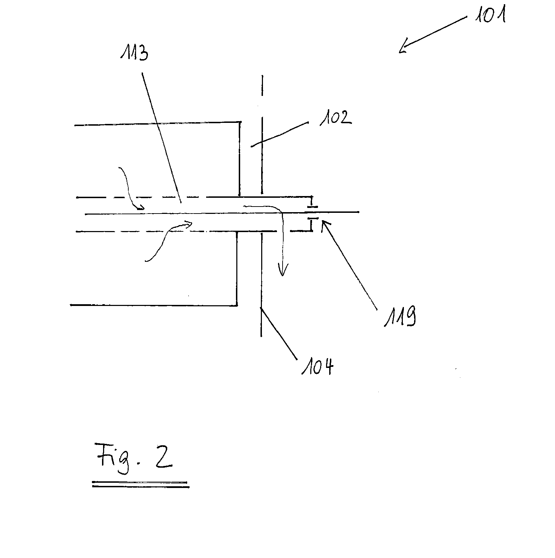

Figur 2 zeigt eine schematische Schnittdarstellung eines Details eines zweiten Ausführungsbeispiels für eine Röstvorrichtung 101 mit Hohlwelle 113. Die Hohlwelle 113 ist auf der Seite der Abgasabführung ausserhalb des Röstbehälters 102 gelagert.

Das Abgas kann zwischen Röstgehäuse 104 und Lager 119 aus der Hohlwelle 113 herausgeführt werden.

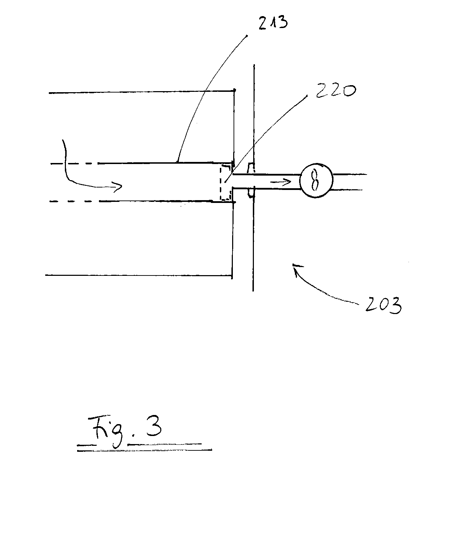

Figur 3 zeigt eine schematische Schnittdarstellung eines Details eines dritten Ausführungsbeispiels für eine Röstvorrichtung 201 mit Hohlwelle 213.

Die Hohlwelle 213 ist abgasseitig mit einem auswechselbaren Siebkorb 220 abgeschlossen. Mitgerissene Schüttgut-Teilstückchen werden darin gesammelt und können mit dem Korb 220 entfernt werden.

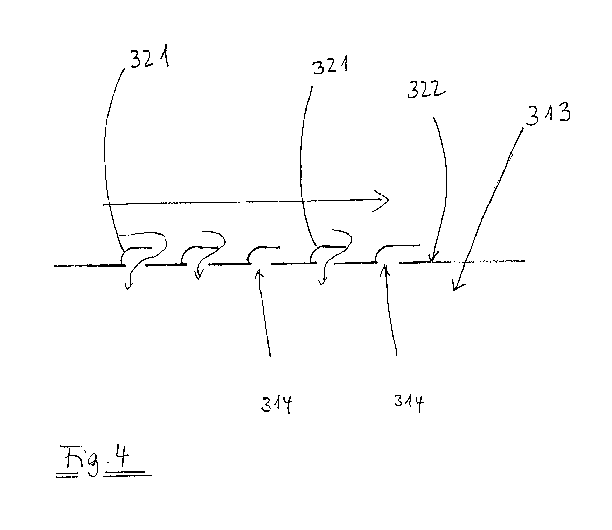

Figur 4 zeigt eine schematische Schnittdarstellung einer Hohlwelle 313 mit Ablenkblechen 321, die an der äusseren Mantelfläche 322 der Hohlwelle 313 an den jeweiligen Öffnungen 314 angebracht sind.

Die Ablenkbleche 321 sorgen für eine scharfe Umlenkung des Abgasstroms und verhindern so, dass Schüttgut oder Schüttgut-Teilstückchen in die Hohlwelle 313 geraten.

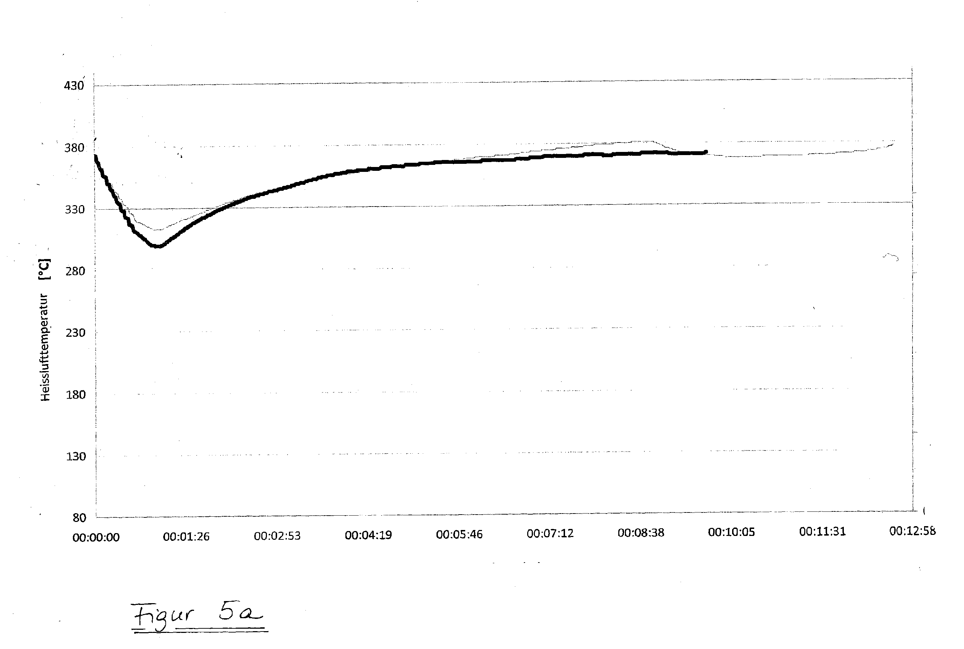

Figur 5a zeigt ein Diagramm, wobei die Heisslufttemperatur (in °C) über der Zeit (in Minuten) aufgetragen ist. Die Messkurve "Normalröstung" (dünne Linie) wurde ermittelt in einem Röstprozess von Grünkaffee, der nach dem herkömmlichen Röstprinzip in einem Trommelröster mit den folgenden Abmessungen durchgeführt wurde.

Die Länge beträgt etwa 0.82m, der Durchmesser 0.77m. Der Brenner hat eine Leistung von 30kW.

Der Abgaszug durch die Abgasöffnung mit einer Fläche von etwa 300cm² beträgt 0.11 Nm³/h (Normkubikmeter pro Stunde, wobei ein Normkubikmeter die Menge ist, die gemäss ISO 2533 bei einem Druck von 1,01325 bar, einer Luftfeuchtigkeit von 0 % (trockenes Gas) und einer Temperatur von 15 °C ein Volumen von einem Kubikmeter hätte).

Die Messkurve "beschleunigte Röstung" (dicke Linie) wurde mit einem zusätzlichen Röstabgasaustrag ermittelt. Dabei wurde der Durchsatz von 0.11 Nm³/h auf 0.16 Nm³/h gesteigert. Die Kurven liegen weitgehend aufeinander, da in der Versuchsanordnung nicht die Temperatur des Gases sondern nur der Durchsatz variiert wurde.

Über den zusätzlichen Abgasaustrag 12 kann die Menge an durchgeführtem Gas derart gesteigert werden, dass beispielsweise beim Rösten von 17.5 kg Kaffeebohnen die Röstzeit von 12 Minuten 40 Sekunden um ca. 23 % auf etwa 9 Minuten 40 Sekunden gesenkt werden kann.

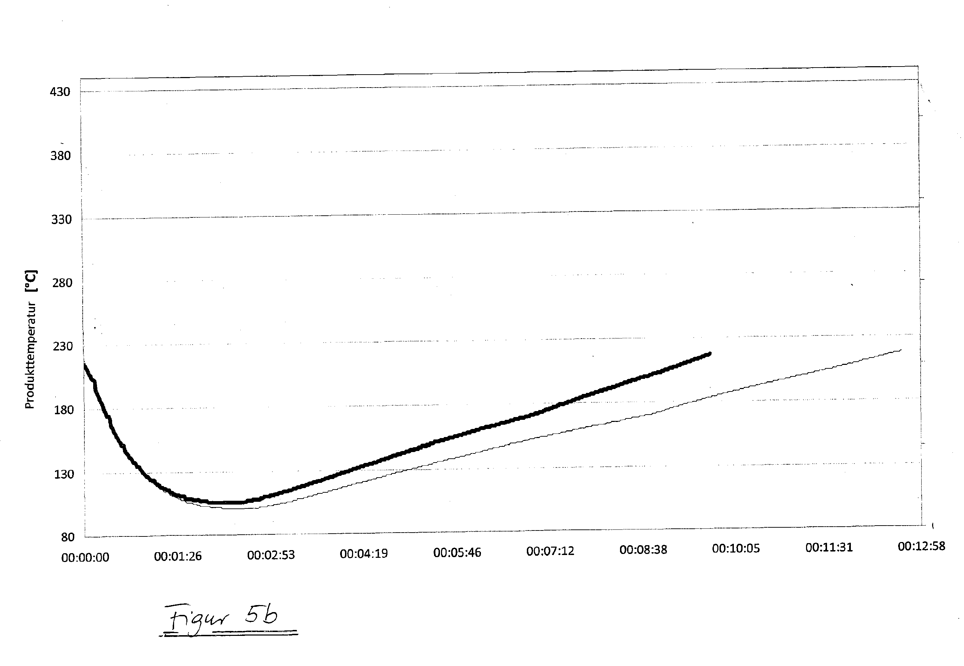

Die in Figur 5b gezeigten Verläufe der Produkttemperatur (in °C) über der Zeit (in Minuten) beruhen auf denselben Röstprozessen, wie oben geschildert.

Die Messdaten auf der dünnen Linie wurden mit einer "Normalröstung" ermittelt, die Messdaten der dicken Linie bei "beschleunigter Röstung".

Der erhöhte Heissluftdurchsatz bewirkt, dass schon nach ca. 3 Minuten die Temperatur des Produkts deutlich höher ist als bei dem herkömmlichen Röstprozess. Der erhöhte Heissluftdurchsatz und das höhere Luft-zu-Bohnen-Verhältnis führen zu einem erhöhten Wärmeübergang vom heissen Gas auf das zu röstende Schüttgut.

Der Röstprozess ist beendet, wenn die Kaffeebohnen den gewünschten Röstgrad erreicht haben und somit eine bestimmte Ziel-Farbe erreicht haben.

Der gewünschte Röstgrad und die gewünschte Farbe stellen sich bei erhöhtem Heissluftdurchsatz und erhöhtem Luft-zu-Bohnen-Verhältnis wesentlich früher ein als in einem herkömmlichen Trommelröster.

## Patentansprüche

1. Röstvorrichtung für pflanzliches Schüttgut, insbesondere Kaffeebohnen, mit einem Röstbehälter (2), einer Zuführung (5) zum Zuführen von erhitztem Gas in den Röstbehälter (2) und einer Abgasleitung (7) zum Austragen der Röstabluft und von pflanzlichen Schüttgut-Teilstückchen, **dadurch gekennzeichnet, dass**
(a) die Vorrichtung einen zusätzlichen Abgasaustrag (12) aufweist, insbesondere nämlich eine Hohlwelle (13; 113; 213; 313), zum Abführen von Röstabgas aus dem Röstbehälter (2); und/oder
(b) die Vorrichtung eine Hohlwelle zum Zuführen von erhitztem Gas aufweist, wobei von der Hohlwelle abzweigende Gasleitungen mit radial von der Hohlwelle beabstandeten Gasdüsen vorgesehen sind, sodass das Gas über die Gasdüsen, die insbesondere auf einem Rührwerkzeug angeordnet sind, in die Röstkammer einbringbar ist.

2. Röstvorrichtung gemäss Anspruch 1, **dadurch gekennzeichnet, dass** die Vorrichtung eine Hohlwelle (13; 113; 213; 313) aufweist und mindestens eine Öffnung (14; 314) in der Hohlwelle (13; 113; 213; 313) vorgesehen ist, durch die Röstabgas vom Röstbehälter (2) in die Hohlwelle (13; 113; 213; 313) und/oder Heissgas aus der Hohlwelle in den Röstbehälter gelangen kann.

3. Röstvorrichtung gemäss Anspruch 2, **dadurch gekennzeichnet, dass** auf der Mantelfläche (322) der Hohlwelle (313) Ablenkbleche (321) für eine scharfe Röstgasumlenkung angebracht sind, die derart ausgestaltet sind, dass zwar bei Betreib der Röstvorrichtung Röstgas durch die Öffnung (314) gelangt, aber praktisch kein Schüttgut oder Schüttgut-Teilstückchen.

4. Röstvorrichtung gemäss einem der vorhergehenden Ansprüche, **dadurch gekennzeichnet, dass** die Vorrichtung (1; 101; 201) einen zusätzlichen Abgasaustrag (12) aufweist und der Abgasaustrag (12) mit einem Sieb (15) versehen ist, welches zumindest teilweise verhindert, dass pflanzliches Schüttgut in die Hohlwelle eindringt.

5. Röstvorrichtung gemäss Anspruch 4, **dadurch gekennzeichnet, dass** die Vorrichtung (1; 101; 201) ein Abstreifelement aufweist, welches während des Betriebes über das Sieb (15) führbar ist, sodass der Abgasaustrag nicht verstopft wird und offen bleibt.

6. Röstvorrichtung gemäss mindestens einem der vorhergehenden Ansprüche, **dadurch gekennzeichnet, dass** die Röstvorrichtung (1; 101; 201) mit einer Absaugvorrichtung (10), insbesondere mit einem einstellbaren Ventilator (11), ausgestattet ist.

7. Röstvorrichtung gemäss Anspruch 6, **dadurch gekennzeichnet, dass** die Vorrichtung (1; 101; 201) einen zusätzlichen Abgasaustrag (12) aufweist und der zusätzliche Abgasaustrag (12) über eine zwischengeschaltete einstellbare Drosselklappe (24) mit der Absaugvorrichtung (10), insbesondere mit einem einstellbaren Haupt-Ventilator (11), verbunden ist.

8. Röstvorrichtung gemäss mindestens einem der vorhergehenden Ansprüche, **dadurch gekennzeichnet, dass** die Vorrichtung (1; 101; 201) einen zusätzlichen Abgasaustrag (12) aufweist und der zusätzliche Abgasaustrag (12) mit einer separaten Absaugvorrichtung (16), insbesondere mit einem einstellbaren Ventilator (17), verbunden ist.

9. Röstvorrichtung gemäss mindestens einem der vorhergehenden Ansprüche, **dadurch gekennzeichnet, dass** die Vorrichtung (1; 101; 201) einen zusätzlichen Abgasaustrag (12) aufweist und der Röstbehälter (2) für die Röstgasabführung einen bezüglich einer Welle konzentrischem Spalt aufweist, insbesondere mit einem Labyrinthsystem.

10. Röstvorrichtung gemäss mindestens einem der vorhergehenden Ansprüche, **dadurch gekennzeichnet, dass** die Vorrichtung (1; 101; 201) eine Hohlwelle (13; 113; 213; 313) aufweist und die Hohlwelle (13; 113; 213; 313) zumindest auf einer Seite mit einer Dreheinführung (18), z.B. einer Deublin-Dreheinführung, verbunden ist.

11. Röstvorrichtung gemäss mindestens einem der vorhergehenden Ansprüche, **dadurch gekennzeichnet, dass** die Vorrichtung 1; 101; 201) eine Hohlwelle(13; 113; 213; 313) aufweist und die Hohlwelle (13; 113; 213; 313) zumindest auf einer Seite ausserhalb des Röstbehälters gelagert ist, insbesondere mindestens auf der Seite der Abgasabführung.

12. Hohlwelle zum Gebrauch in einer Röstvorrichtung mit einem Röstbehälter, insbesondere nach einem der Ansprüche 1-11, wobei die Hohlwelle (13; 113; 213; 313) mindestens eine Öffnung (14; 314) aufweist, durch die Röstabgas vom Röstbehälter (2) in die Hohlwelle (13; 113; 213; 313) und/oder Heissgas aus der Hohlwelle in den Röstbehälter gelangen kann, **dadurch gekennzeichnet, dass**
(a) die Hohlwelle (13; 113; 213; 313) einen Anschluss zur Verbindung mit einer Absaugvorrichtung (16) aufweist und/oder
(b) von der Hohlwelle abzweigenden Gasleitungen mit radial von der Hohlwelle beabstandeten Gasdüsen vorgesehen sind, sodass das Gas über die Gasdüsen, die insbesondere auf einem Rührwerkzeug angeordnet sind, in die Röstkammer einbringbar ist.

13. Verfahren zum Rösten von pflanzlichem Schüttgut, insbesondere Kaffeebohnen, ein einer Röstvorrichtung mit einem Röstbehälter, insbesondere nach einem der Ansprüche 1-11, wobei erhitztes Gas in den Röstbehälter (2) geleitet wird und Röstabluft sowie pflanzliche Schüttgut-Teilstückchen über eine Abgasleitung (7) aus dem Röstbehälter ausgeleitet werden, **dadurch gekennzeichnet, dass**
(a) zumindest ein Teil des Röstabgases durch eine Hohlwelle (13; 113; 213; 313) aus dem Röstbehälter (2) abgeführt wird
und/oder
(b) zumindest ein Teil des Heissgases über von einer Hohlwelle abzweigende Gasleitungen mit radial von der Hohlwelle beabstandeten Gasdüsen, die insbesondere auf einem Rührwerkzeug angeordnet sind, in die Röstkammer eingebracht wird.
